# EUROPÄISCHE PATENTSCHRIFT

(11) **EP 3 874 173 B1**
(45) Veröffentlichungstag und Bekanntmachung des Hinweises auf die Patenterteilung: **10.08.2022**
(21) Anmeldenummer: 19734674.5
(22) Anmeldetag: 13.06.2019
(51) Int. Cl.: F16C 25/06, F16C 35/06, F16C 35/073, F16C 35/078

(54) **VORGESPANNTE WÄLZLAGERUNG**
PRE-TENSIONED ROLLING ELEMENT MOUNTING
MONTAGE SUR PALIER À ROULEMENT PRÉCONTRAINT

(30) Priorität: 31.10.2018 CN 201811288301
(43) Veröffentlichungstag der Anmeldung: 08.09.2021
(73) Patentinhaber: Schaeffler Technologies AG & Co. KG, 91074 Herzogenaurach (DE)
(72) Erfinder: HAN, Huimin, Jiangsu, 215400 (CN); ZIMMERMANN, Klaus, 97723 Oberthulba (DE); DITTRICH, Thomas, 97762 Hammelburg (DE)
(86) Internationale Anmeldenummer: PCT/DE2019/100541
(87) Internationale Veröffentlichungsnummer: WO 2020/088708

(56) Entgegenhaltungen:
- EP-A1- 0 424 584
- EP-A1- 2 372 145
- DE-B- 1 108 629
- DE-U- 1 816 298
- DE-U1- 9 216 206
- US-A- 2 764 437
- US-A- 4 364 687
- US-A- 5 489 156
- US-A- 5 685 650
- US-A- 5 897 214
- US-A1- 2008 075 402

## Beschreibung

### Technisches Gebiet

Die Erfindung befasst sich mit einer vorgespannten Wälzlagerung sowie mit einem Verfahren zur Montage und einem Verfahren zur Demontage einer vorgespannten Wälzlagerung.

Unter einer vorgespannten Wälzlagerung wird eine Anordnung verstanden, bei der auf die zur Lagerung beispielsweise einer Welle verwendeten Wälzlager eine Vorlast wirkt, die ein vorhandenes, zwischen den Wälzkörpern den von den Lagerringen bereitgestellten Laufbahnen gegebenes Spiel zurückstellt wird und so für einen ruhigen und präzisen Lauf des Wälzlagers sorgt.

Um diese Vorspannung einzustellen, hat sich die sogenannte Wärmmontage durchgesetzt. Dazu wird das zu montierende Wälzlager erwärmt und in diesem Zustand mit seiner Bohrung im Innenring auf die Welle aufgeschoben. Kühlt dann das Wälzlager ab, entsteht ein Pressverband zwischen dem Innenring des Wälzlagers und der Welle, welcher durch die geringe Aufweitung des Innenrings dafür verantwortlich ist, dass ein im unmontierten Zustand des Wälzlagers vorhandenes Spiel zurückgestellt oder auch gänzlich beseitigt wird. Soll die Welle geschont werden, ist es nicht unüblich, vor dem Aufschrumpfen des Wälzlagers auf die Welle noch einen Zwischenring vorzusehen, der ebenfalls auf die Welle aufgeschrumpft wird, bevor das Wälzlager mit der Welle verbunden wird. Wird ein Zwischenring verwendet, entsteht der die Vorspannung des Wälzlagers bewirkende Pressverband zwischen dem Zwischenring und dem Wälzlager.

Wie leicht einzusehen ist, ist Herstellung der gewünschten Vorspannung des Wälzlagers durch Wärmmontage sehr aufwendig. Gleiches gilt natürlich auch für die Demontage von vorgespannten Wälzlagern, denn im Gegensatz zur Montage lässt sich die Bohrung im Innenring durch Erwärmung nicht gegenüber der Welle vergrößern, weil auf das Wälzlager wirkende Wärmequellen immer auch die Welle mit erwärmen. Daher gelingt die Demontage von vorgespannten Wälzlagern in der Regel nur durch Anwendung von mechanisch wirkenden, das Wälzlager zerstörenden Maßnahmen. EP 0 424 584 zeigt eine gattungsgemäße, verbesserte Form einer vorgespannten Wälzlagerung, die allerdings weiterhin Nachteile bei der Demontage besitzt.

Daher liegt der Erfindung die Aufgabe zugrunde, ein vorgespanntes Wälzlager anzugeben, welches einfach zu montieren und auch wieder zu demontieren ist.

### Darstellung der Erfindung

Diese Aufgabe wird durch die in Anspruch 1 angegebenen Merkmale gelöst. Vorteilhafte Aus- und Weiterbildungen sind in den Ansprüchen 2 bis 8 angegeben. Ein Montage- bzw. Demontageverfahren erfindungsgemäßer Wälzlager findet sich Anspruch 9 bzw. Anspruch 10.

Die Erfindung geht von einem Wälzlager aus, welches einen Außenring, einen von einer Bohrung durchzogenen Innenring und Wälzkörper umfasst, wobei die Wälzkörper auf von den beiden Lagerringen bereitgestellten Laufbahnen abrollen. Die Bohrung des Innenrings wird von einer Welle durchdrungen, wenn das Wälzlager auf die Welle aufgeschoben ist. Außerdem sind Festlegemittel vorgesehen, die den auf die Welle aufgeschobenen Innenring und damit das gesamte Wälzlager axial auf der Welle festlegen, wobei mindestens eines dieser Festlegemittel eine Wellenmutter ist.

Die vereinfachte Montage und/oder Demontage des Wälzlagers gelingt dann, wenn die Innenkontur der Bohrung konisch ausgebildet ist, eine erste Hülse vorgesehen ist, die mit der Welle lösbar verbunden ist, deren Außenmantel ebenfalls konisch ausgebildet ist und die dem der Wellenmutter nahen Ende einen nach radial außen gerichteten Kragen aufweist, im verbundenen Zustand von Innenring und Welle die konische Innenkontur der Bohrung am konischen Außenmantel der ersten Hülse anliegt, und die Wellenmutter von wenigstens einer ersten Axialbohrung durchdrungen ist, wobei das Bohrzentrum von zumindest einer der Axialbohrungen und das Bohrzentrum einer, im Kragen der ersten Hülse vorgesehenen und mit einem Gewinde versehenen Axialbohrung fluchten.

Dabei geht -wie noch im Zusammenhang mit den Montage- bzw. Demontageverfahren gezeigt werden wird- die Erfindung davon aus, dass durch eine axiale Verschiebung der ersten Hülse gegenüber der Innenkontur der Bohrung im Innenring, der die erforderliche Vorspannung herstellende Pressverband zwischen Innenring und Welle hergestellt bzw. aufgelöst wird.

Weist die erste Hülse an der inneren und/oder äußeren Mantelfläche Ausnehmungen auf, besitzt diese eine hohe Labilität und Stauchfähigkeit, was die Herstellung des Pressverbandes zwischen Innenring und Welle begünstigt.

Enden an der Innenkontur der Bohrung und/oder an der Welle im Bereich zwischen den Festlegemitteln Öldruckbohrungen, die mit einer Hydraulikeinheit verbunden sind, wird die Montage bzw. die Demontage erleichtert, wenn beim Hineinschieben oder Herausziehen der ersten Hülse an den Öldruckbohrungen Öldruck ansteht.

Eine leicht herzustellende zylindrische Bohrung im Innenring bleibt erhalten, wenn die Innenkontur der Bohrung von einer zweiten Hülse bereitgestellt ist, die in die Bohrung des Innenrings eingeschoben ist.

Eine leichte Montage der zweiten Hülse der Bohrung des Innenrings ist dann gegeben, wenn die Ringform der zweiten Hülse von wenigstens einem Schlitz unterbrochen ist, der die zweite Hülse in axialer und radialer Richtung vollständig durchzieht.

Eine gute und gleichmäßige Verteilung des Öldrucks ist dann gegeben, wenn die Innenkontur der Bohrung und/oder die Mantelflächen der Hülsen mit Vertiefungen und/oder Kanälen versehen sind, die mit den Öldruckbohrungen verbunden sind.

Die Festlegung des Innenrings bzw. des Wälzlagers bleibt unverändert, wenn Sicherungsmittel vorgesehen sind, die eine Verdrehung der Wellenmutter ausschließen.

Eine sehr genaue Einstellung der Vorspannung des Wälzlagers ist dann gegeben, wenn Messmittel vorgesehen sind, welche den Verschiebeweg der zweiten Hülse gegenüber der konischen Innenkontur der Bohrung detektieren.

Die einfache und bezüglich der Vorspannung sehr genaue Montage eines Wälzlagers gelingt dann, wenn der Innenring auf die mit der ersten Hülse versehenen Welle aufgeschoben wird, so dass der Innenring an einem der Festlegemittel anliegt, der Innenring mit dem weiteren Festlegemittel in der Form einer Wellenmutter auf der Welle axial festgelegt wird, indem die Wellenmutter mit dem Innenring zur Anlage gebracht wird, wenn Vortriebschrauben vorgesehen werden, die in die jeweiligen, dafür vorgesehenen Axialbohrungen eingeschraubt werden, wobei mit zunehmender Einschraubtiefe die Vortriebschrauben mit dem Kragen der ersten Hülse in Kontakt treten und diese axial gegenüber der Innenkontur der Bohrung verschieben, der axiale Verschiebeweg der ersten Hülse gegenüber der Innenkontur der Bohrung von einem Messmittel detektiert wird und die Verschiebung der ersten Hülse unter Öldruck erfolgt, indem Öl von einer Hydraulikeinheit in die Öldruckbohrungen gepresst wird.

Eine einfache Demontage des vorgespannten Wälzlagers von der Welle ist dann gegeben, wenn das weitere Festlegemittel in der Form einer Wellenmutter in einem solchen Umfang losgedreht wird, dass das Bohrzentrum von zumindest einer Axialbohrung der Wellenmutter mit einem Bohrzentrum einer im Kragen der ersten Hülse vorgesehenen Axialbohrung fluchtet, dann Löseschrauben durch die Axialbohrungen in der Wellenmutter in am Kragen vorgesehene Axialbohrungen eingeschraubt werden, wobei bei Kontakt des Schraubenkopfes mit der Wellenmutter und bei weiterem Einschrauben der Löseschrauben die erste Hülse auf der Innenkontur der Bohrung axial herausgezogen wird, und wenn die Demontage die Trennung des Wälzlagers von der Welle unter Öldruck erfolgt, indem Öl von einer Hydraulikeinheit in die Öldruckbohrungen gepresst wird.

### Kurze Darstellung der Figuren

Es zeigen:
- Fig. 1: eine Wälzlagerung,
- Fig. 2: zweite Hülse,
- Fig. 3: erste Hülse,
- Fig. 4: Wellenmutter,
- Fig. 5: Montagedarstellung.
- Fig. 6: Demontagedarstellung, und
- Fig. 7: Detail von Innenring und Welle.

### Wege zum Ausführen der Erfindung

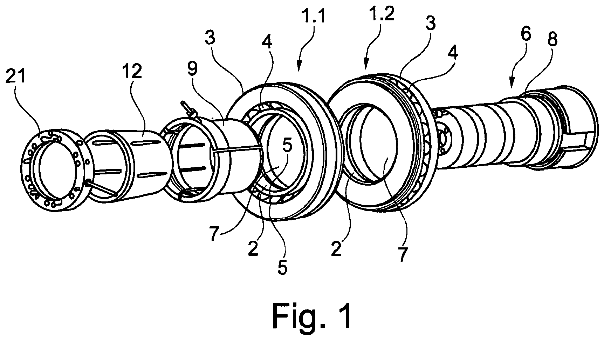

In Figur 1 ist eine Wälzlagerung gezeigt. Diese Wälzlagerung wird in diesem Ausführungsbeispiel von zwei Wälzlagern 1.1 und 1.2 gebildet und kann in einem anderen Ausführungsbeispiel auch nur eines der Wälzlager 1.1, 1.2 umfassen. Jedes dieser Wälzlager 1.1, 1.2 wird von einem Innenring 2, einem den Innenring 2 koaxial umgebenden Außenring 3 und Wälzkörpern 4 gebildet, wobei die Wälzkörper 4 auf von Innenring 2 und Außenring 3 bereitgestellten Laufbahnen 5 zwischen den jeweiligen Lagerringen 2, 3 abrollen.

Ferner ist in Fig. 1 eine Welle 6 gezeigt, die die Bohrung 7 jedes der beiden Innenringe 2 durchdringt, wenn die Wälzlager 1.1, 1.2. auf der Welle 6 montiert sind. Die Welle 6 ist mit einem ersten Festlegemittel versehen, welches von einer einstückig mit der Welle 6 versehenen Wellenschulter 8 gebildet ist. Sind die beiden Wälzlager 1.1, 1.2 auf der Welle 6 montiert, liegen die beiden Wälzlager 1.1, 1.2 axial abstandlos aneinander, wobei sich das Wälzlager 1.2 durch körperlichen Kontakt an der Wellenschulter 8 abstützt.

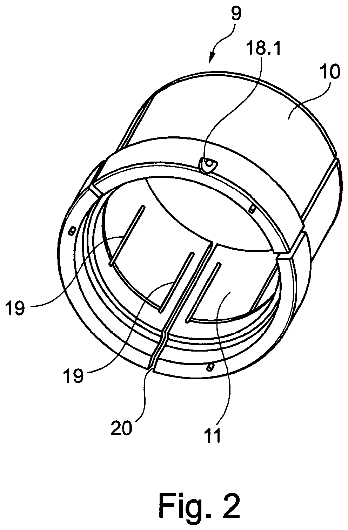

Mit dem Bezugszeichen 9 ist eine zweite Hülse bezeichnet, die in diesem Ausführungsbeispiel einen zylindrischen Außenmantel 10 hat und die in die ebenfalls zylindrischen Bohrungen 7 der beiden Innenringe 2 eingeschoben ist, wenn beide Wälzlager 1.1, 1.2 auf der Welle 6 montiert sind. Die innere Kontur 11 der zweiten Hülse 9 ist konisch ausgebildet. Wie der Fig. 2, welche eine zweite Hülse 9 vergrößert zeigt, entnehmbar ist, ist die zweite Hülse 9 mit einer Öldruckbohrung 18.1 versehen, die mit einer nicht gezeigten Hydraulikeinheit verbindbar ist. Diese Öldruckbohrung 18.1 speist an der inneren Kontur 11 der zweiten Hülse 9 vorgesehene, nach radial innen offene Kanäle 19. Um das Einschieben der zweiten Hülse 9 in die Bohrung 7 der Innenringe 2 zu erleichtern, ist die zweite Hülse 9 mit einem Schlitz 20 versehen, der die zweite Hülse 9 axial und radial vollständig durchzieht und es daher erlaubt, den Durchmesser der zweiten Hülse 9 während des Einschiebens der zweiten Hülse 9 in die Bohrung 7 elastisch etwas zu verringern.

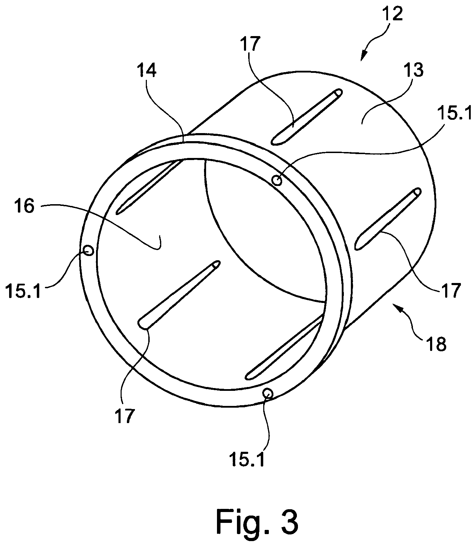

Mit Bezugszeichen 12 ist in Fig. 1 eine erste Hülse bezeichnet, die einen konischen Außenmantel 13 und einen radial nach außen gerichteten Kragen 14 aufweist (Fig. 3). In dem Kragen 14 sind drei mit Gewinden versehene Axialbohrungen 15.1 vorgesehen. Außerdem sind der konische Außenmantel 13 und die zylindrische Innenmantel 16 der ersten Hülse 12 zur Erhöhung der Labilität und Stauchungsfähigkeit der ersten Hülse 12 mit rinnenförmigen Ausnehmungen 17 versehen, welche sich in Richtung der Längsachse der ersten Hülse 12 erstrecken, ohne dabei aber den Hülsenkörper 18 der ersten Hülse 12 zu durchbrechen.

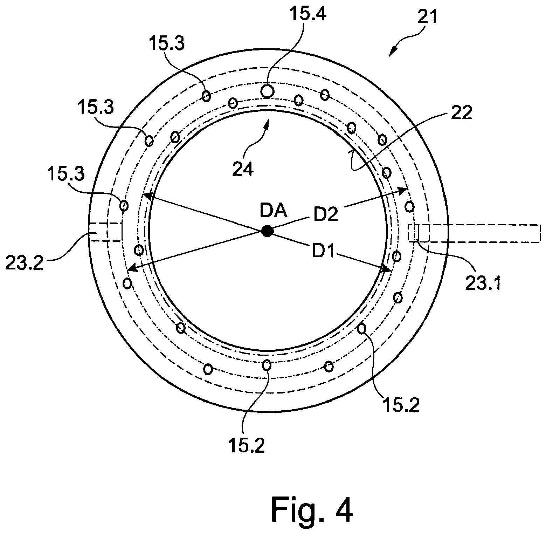

In Fig. 1 zeigt außerdem noch ein weiteres Festlegemittel, welches vorliegend von einer Wellenmutter 21 gebildet ist. Sind die beiden Wälzlager 1.1, 1.2 auf die Welle 6 aufgeschoben, so dass das Wälzlager 1.2 an der Wellenschulter 8 anliegt, und die beiden Hülsen 9, 12 zwischen den Innenringen 2 und der Welle 6 angeordnet sind, werden die beiden Innenringe 2 durch Anziehen der Wellenmutter 21 die beiden Wälzlager 1.1, 1.2 axial auf der Welle 6 festgelegt. Dazu ist die Wellenmutter 21, wie Fig. 4 zeigt, mit einem Innengewinde 22 versehen, welches in bekannter Weise mit einem Außengewinde (nicht gezeigt) auf der Welle 6 zusammenwirkt. Außerdem sind in der Wellenmutter 21 (Fig. 4) einige Axialbohrungen 15.2, 15.3 und 15.4 und einige Radialbohrungen 23.1, 23.2 vorgesehen. In die Radialbohrungen 23.1, 23.2 sind Stangen einsteckbar (wie für die Radialbohrung 23.1 angedeutet), um die Wellenmutter 21 gegenüber der Welle 6 zu verdrehen. Die Axialbohrungen 15.2 liegen auf dem Teildurchmesser D1, welcher kleiner dem Teilkreisdurchmesser D2 ist, auf welchem die Axialbohrungen 15.3 liegen. Ferner ist von der Innenseite der Wellenmutter 21 eine Ringnut 24 eingebracht, die sich in Umfangsrichtung erstreckt und fast bis an den äußeren Umfang der Wellenmutter 21 reicht (angedeutet durch die Strichelung). Diese Ringnut 24 wird von der Axialbohrung 15.4 durchdrungen. Ist die Wellenmutter 21 auf die Welle 6 aufgeschraubt und wird in die Axialbohrung 15.4. eine Schraube (nicht gezeigt) eingedreht, verändert sich die axiale Breite der Ringnut 24 etwas, wodurch zur Realisierung einer Schraubensicherung in bekannter Weise die Gewindegänge des Innengewindes 22 der Wellenmutter 21 gegen die Gewindegänge der Welle 6 gepresst werden.

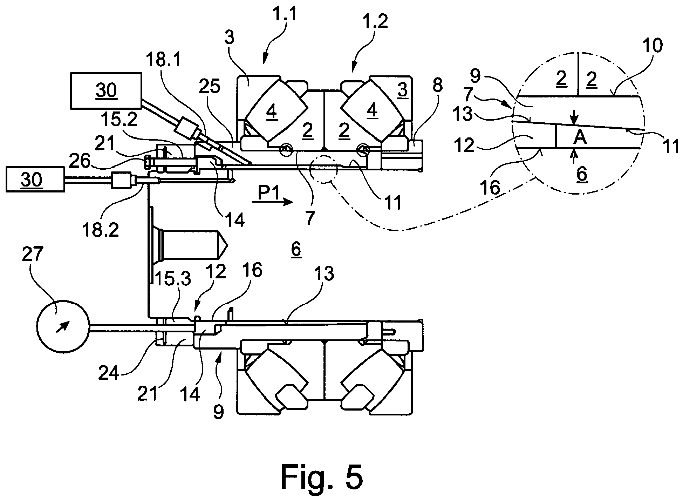

Die Montage einer vorgespannten Wälzlagerung wird nun an Hand von Fig. 5 erläutert.

Dazu sind zwei Wälzlager 1.1. 1.2 Rücken an Rücken bereits auf eine Welle 6 aufgeschoben, so dass der Innenring 2 des Wälzlagers 1.2 an der Wellenschulter 8 der Welle 6 anliegt. Die Bohrung 7 der beiden Innenringe 2 wird von der zweiten Hülse 9 durchgriffen, deren innere Kontur 11 einen geringen Radialabstand A zur Welle 6 einhält. Da die innere Kontur 11 der zweiten Hülse 9 konisch ausgebildet ist, wächst der Radialabstand A ausgehend vom der Wellenschulter 8 nahen Ende zum der Wellenschulter 8 fernen Ende an. Ferner ist zweite Hülse 9 an ihrem der Wellenschulter 8 fernen Ende mit einem nach radial außen gerichteten Flansch 25 versehen, der im montierten Zustand am Innenring 2 des Wälzlagers 1.1 anliegt. In den Radialabstand A ist die erste Hülse 12 eingeschoben, wobei deren zylindrischer Innenmantel 16 die Welle 6 umgibt und deren konischer Außenmantel 13 komplementär zur konischen Innenkontur 11 der zweiten Hülse 9 verläuft und dabei etwas in den Radialabstand A eingreift.

Auch sind die beiden Wälzlager 1.1, 1.2 bereits durch Anschrauben der Wellenmutter 21 auf die Welle 6 auf dieser axial endgültig festgelegt, indem die Innenringe 2 unter Vermittlung des Flansches 25 von der Wellenmutter 21 gegen die Wellenschulter 8 gedrückt sind.

Sodann werden Vortriebschrauben 26 in die mit Gewinden versehenen Axialbohrungen 15.2 der Wellenmutter 21 eingeschraubt, welche dann auf den Kragen 14 der ersten Hülse 12 treffen und die erste Hülse 9 in Pfeilrichtung P1 relativ zur zweiten Hülse 9 verschieben, wodurch der für die Erzeugung der Vorspannung der Wälzlager 1.1, 1.2 erforderliche Pressverband gebildet wird.

Das Anziehen der Vortriebschrauben 26 bzw. die Relativbewegung der ersten Hülse 12 zur zweiten Hülse 9 erfolgt unter Öldruck. Dazu ist die Öldruckbohrung 18.1 an der zweiten Hülse 9 mit einer Hydraulikeinheit 30 verbunden, wird Öl in die Kanäle 19 (Fig. 2) der zweiten Hülse 9 drückt und damit sich den Radialabstand A zwischen Welle 6 und zweiter Hülse 9 etwas vergrößert, so dass das Einschieben der ersten Hülse 12 in die zweite Hülse 9 erleichtert wird. Wie der Darstellung gemäß Fig. 5 entnehmbar ist, ist auch die Welle 6 mit einer Öldruckbohrung 18.2 versehen, die während der Montage ebenfalls wie die Öldruckbohrung 18.1 mit der Hydraulikeinheit 30 verbunden ist und daher ebenso wie diese Öl in den Bereich zwischen Wellenmutter 21 und Wellenschulter 8 presst.

Die axiale Bewegung der ersten Hülse 12 gegenüber der zweiten Hülse 9 wird einer Messuhr 27 aufgenommen, die in eine Axialbohrung 15.3 festgelegt ist und mit dem Kragen 14 der ersten Hülse 12 in Wirkverbindung steht.

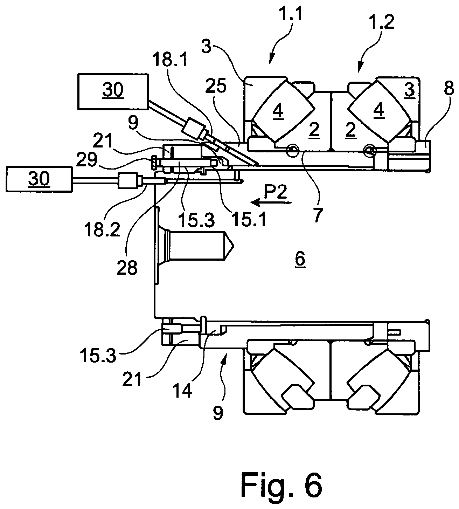

Die Demontage einer vorgespannten Walzlagerung soll nun anhand Fig. 6 erläutert werden.

Dazu wird zunächst die Schraubensicherung der Wellenmutter 21 beseitigt und die Wellenwellen 21 soweit losgedreht, dass die Bohrzentren der Axialbohrungen 15.3 mit den Bohrzentren der Axialbohrungen 15.1 im Kragen 14 der ersten Hülse 12 fluchten. Wurden nach der Montage die Vortriebschrauben 26 in den Axialbohrungen 15.2 der Wellenmutter 21 belassen, was zur Axialabstützung der ersten Hülse 12 vorteilhaft sein kann, sind diese natürlich vor dem Losdrehen der Wellenmutter 21 zu lösen bzw. zu entfernen. Sodann werden Löseschrauben 28 in die lediglich als Durchgangsbohrung ausgelegten Axialbohrungen 15.3 eingesteckt und in die mit Gewinde versehenen Axialbohrungen 15.1 der ersten Hülse 12 eingeschraubt. Kommen die Schraubenköpfe 29 der Löseschrauben 28 mit der Wellenmutter 21 in Kontakt, ziehen die Löseschrauben 28 in Pfeilrichtung P2 die zweite Hülse 12 aus den Radialabstand A zwischen zweiter Hülse 9 und Welle 6 etwas heraus, wodurch der Pressverband aufgehoben wird, die Wälzlager 1.1, 1.2 locker auf der Welle 6 liegen und nach dem vollständigen Entfernen der Wellenmutter 21 leicht und ohne weitere Krafteinwirkung von Welle 6 abgezogen werden können. Ebenso wie schon im Zusammenhang mit Fig. 5 erläutert, erfolgt auch die Demontage in vorteilhafter Weise unter Öldruck, indem die jeweiligen Öldruckbohrungen 18.1, 18.2 mit der Hydraulikeinheit 30 verbunden sind,

Besondere Löseschrauben 28 müssen nicht vorgesehen werden, sondern es können auch Vortriebschrauben 26 zur Demontage verwendet werden, wenn die gewindefreien Axialbohrungen 15.3 gegenüber den mit Gewinden versehenen Axialbohrungen 15.2 einen etwas größeren Durchmesser haben, so dass die als Vortriebsschrauben 26 verwendeten und jetzt als Löseschrauben 28 dienenden Schrauben frei durch die gewindefreien Axialbohrungen 15.3 gesteckt werden können.

Um die Festigkeit der Wellenmutter 21 nicht durch viele, auf zwei Teilkreisen angeordnete Axialbohrungen 15.2, 15.3. zu schwächen, kann in einem anderen - nicht weiter gezeigten- Ausführungsbeispiel auf einen Teilkreis mit Axialbohrungen verzichtet werden. In diesem Fall werden die mit Gewinden versehenen und lediglich auf einem Teildurchmesser D1 angeordneten Axialbohrungen 15.2 nicht nur als Gewindebohrungen für die Vortriebschrauben 26, sondern gleichzeitig auch als bloße Durchgangsbohrungen für die Aufnahme von Löseschrauben 28 verwendet. Um dies allerdings zu realisieren, ist es natürlich selbstverständlich, dass gesonderte Löseschrauben 28 verwendet werden müssen, deren Durchmesser gegenüber den Vortriebschrauben 26 geringer ist, so dass auch hier die Löseschauben 28 frei durch die Axialbohrungen 15.2 gesteckt werden können.

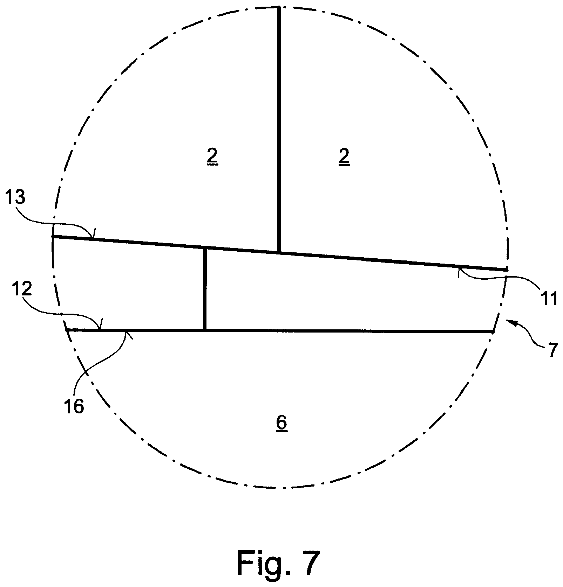

Bisher wurde davon ausgegangen, dass die konische Kontur 11, welche mit dem konischen Außenmantel 13 der ersten Hülse 12 zusammenwirkt, von einer zweiten Hülse 9 bereitgestellt wird. Wie Fig. 7 zeigt, die ähnlich der Detailzeichnung gemäß Fig. 5 nur einen Ausschnitt zeigt, kann die konische Kontur 11 auch direkt an den Innenringen 2 bereitgestellt werden, wodurch sich dann allerdings der Bearbeitungsaufwand wegen der Konizität der Bohrungen 7 in den Innenringen 2 etwas erhöht. Diese konische, direkt an den Innenringen ausgebildete Kontur 11 wirkt dann zur Herstellung eines Pressverbandes mit dem ebenfalls konischen Außenmantel 13 der ersten Hülse 12 zusammen.

### Bezugszeichenliste

- 1.1, 1.2: Wälzlager
- 2: Innenring
- 3: Außenring
- 4: Wälzkörper
- 5: Laufbahn
- 6: Welle
- 7: Bohrung
- 8: Wellenschulter
- 9: zweite Hülse
- 10: zylindrische Außenmantel
- 11: innere Kontur
- 12: erste Hülse
- 13: konischer Außenmantel
- 14: Kragen
- 15.1, 15.2, 15.n: Axialbohrung
- 16: zylindrische Innenmantel
- 17: Ausnehmungen
- 18.1; 18.2: Öldruckbohrung
- 19: Kanal
- 20: Schlitz
- 21: Wellenmutter
- 22: Innengewinde
- 23: Radialbohrungen
- 24: Ringnut
- 25: Flansch
- 26: Vortriebschauben
- 27: Messuhr
- 28: Löseschrauben
- 29: Schraubenkopf
- 30: Hydraulikeinheit

## Patentansprüche

1. Vorgespannte Wälzlagerung mit mindestens einem Wälzlager (1.1, 1.2), umfassend einen Außenring (3), einen Innenring (2), welcher von einer Bohrung (7) durchzogen ist, und Wälzkörpern (4), die auf von Außenring (3) und Innenring (2) bereitgestellten Laufbahnen (5) abrollen,
mit einer Welle (6), die die Bohrung (7) des Innenrings durchdringt, und
mit Festlegemitteln (8, 21) die den auf die Welle (6) aufgeschobenen Innenring (2) axial auf der Welle (6) festlegen, wobei mindestens eines dieser Festlegemittel eine Wellenmutter (21) ist,
wobei
die Innenkontur (11) der Bohrung (7) konisch ausgebildet ist,
wobei eine erste Hülse (12) vorgesehen ist, die mit der Welle (6) lösbar verbunden ist,
deren Außenmantel (13) ebenfalls konisch ausgebildet ist und die dem der Wellenmutter (21) nahen Ende einen nach radial außen gerichteten Kragen (14) aufweist,
wobei im verbundenen Zustand von Innenring (2) und Welle (6) die konische Innenkontur (11) der Bohrung (7) am konischen Außenmantel (13) der ersten Hülse (12) anliegt, und
wobei die Wellenmutter (21) von wenigstens einer Axialbohrung (15.3) durchdrungen ist,
**dadurch gekennzeichnet, dass**
das Bohrzentrum zumindest einer dieser Axialbohrungen (15.3) und das Bohrzentrum einer im Kragen (14) der ersten Hülse (12) vorgesehenen und mit einem Gewinde versehenen Axialbohrung (15.1) fluchten.

2. Vorgespannte Wälzlagerung nach Anspruch 1
**dadurch gekennzeichnet,**
**dass** die erste Hülse 12 an der inneren und/oder äußeren Mantelfläche 16, 13 Ausnehmungen 17 aufweist.

3. Vorgespannte Wälzlagerung nach Anspruch 1 oder 2
**dadurch gekennzeichnet,**
**dass** an der Innenkontur 11 der Bohrung 7 und/oder der Welle 6 im Bereich zwischen den Festlegemitteln 8, 21 Öldruckbohrungen 18.1, 18.2 enden, die mit einer Hydraulikeinheit 30 verbindbar sind.

4. Vorgespannte Wälzlagerung nach einem der Ansprüche 1 bis 3
**dadurch gekennzeichnet,**
**dass** die Innenkontur 11 der Bohrung 7 von einer zweiten Hülse 9 bereitgestellt ist, die in die Bohrung 7 des Innenrings 2 eingeschoben ist.

5. Vorgespannte Wälzlagerung nach Anspruch 4
**dadurch gekennzeichnet,**
**dass** die Ringform der zweiten Hülse 9 von wenigstens einem Schlitz 20 unterbrochen ist, der die zweite Hülse 9 in axialer und radialer Richtung vollständig durchzieht.

6. Vorgespannte Wälzlagerung nach einem der Ansprüche 1 bis 5
**dadurch gekennzeichnet,**
**dass** zumindest die Innenkontur 11 der Bohrung 7 und/oder die Mantelflächen der zweiten Hülsen 9 mit Vertiefungen und/oder Kanälen 19 versehen sind, die mit den Öldruckbohrungen 18.1 verbunden sind.

7. Vorgespannte Wälzlagerung nach einem der Ansprüche 1 bis 6
**dadurch gekennzeichnet,**
**dass** Sicherungsmittel 24 vorgesehen sind, die eine Verdrehung der Wellenmutter 21 ausschließen.

8. Vorgespannte Wälzlagerung nach einem der Ansprüche 1 bis 7
**dadurch gekennzeichnet,**
**dass** Messmittel 27 vorgesehen sind, welche den Verschiebeweg der ersten Hülse 12 gegenüber der konischen Innenkontur 11 der Bohrung 7 detektieren.

9. Verfahren zum Herstellen einer vorgespannten Wälzlagerung entsprechend einem der Ansprüche 1 bis 8
**dadurch gekennzeichnet,**
**dass** der Innenring (2) auf die mit der ersten Hülse (12) versehenen Welle (6) aufgeschoben wird, so dass der Innenring (2) an einem der Festlegemittel (8) anliegt,
**dass** dann der Innenring (2) mit dem weiteren Festlegemittel in der Form einer Wellenmutter 21 auf der Welle (6) axial festgelegt wird, indem die Wellenmutter (21) mit dem Innenring (2) zur Anlage gebracht wird,
**dass** Vortriebschrauben (26) vorgesehen werden, die in die jeweiligen Axialbohrungen (15.2) der Wellenmutter (21) eingeschraubt werden, wobei mit zunehmender Einschraubtiefe die Vortriebschrauben (26) mit dem Kragen (14) der ersten Hülse (12) in Kontakt treten und diese axial gegenüber der Innenkontur (11) der Bohrung (7) verschieben,
**dass** der axiale Verschiebeweg der ersten Hülse (12) gegenüber der Innenkontur (11) der Bohrung (7) von einem Messmittel (27) detektiert wird, und
**dass** die Verschiebung einer ersten Hülse (12) unter Öldruck erfolgt, indem Öl von einer Hydraulikeinheit (30) in die Öldruckbohrungen (18.1, 18.2) gepresst wird.

10. Verfahren zur Trennung einer vorgespannten Wälzlagerung entsprechend einem der Ansprüche 1 bis 8
**dadurch gekennzeichnet,**
**dass** das weitere Festlegemittel in der Form einer Wellenmutter (21) in einem solchen Umfang losgedreht wird, dass das Bohrzentrum von zumindest einer Axialbohrung (15.3) in der Wellenmutter (21) mit einem Bohrzentrum einer im Kragen der ersten Hülse (12) vorgesehenen Axialbohrung (15.1) fluchtet,
**dass** Löseschrauben (28) durch die Axialbohrungen (15.3) in der Wellenmutter (21) in am Kragen (14) vorgesehenen Axialbohrungen (15.1) eingeschraubt werden, wobei bei Kontakt des Schraubenkopfes (29) mit der Wellenmutter (21) und bei weiterem Einschrauben der Löseschrauben (28) die erste Hülse (12) aus der Innenkontur (11) der Bohrung (7) axial herausgezogen wird, und
**dass** die Trennung des Wälzlagers (1.1, 1.2) von der Welle unter Öldruck erfolgt, indem Öl von einer Hydraulikeinheit (27) in die Öldruckbohrungen (18.1, 18.2) gepresst wird.

## Claims

1. A pre-tensioned rolling element mounting having at least one rolling element (1.1, 1.2), comprising an outer ring (3), an inner ring (2) which is traversed by a bore (7), and rolling bodies (4), which roll on raceways (5) provided by the outer ring (3) and inner ring (2), having a shaft (6) penetrating the bore (7) of the inner ring, and
having fixing means (8, 21), which fix the inner ring (2) pushed onto the shaft (6) axially onto the shaft (6), wherein at least one of these fixing means is a shaft nut (21),
wherein
the inner contour (11) of the bore (7) is conically formed,
wherein a first sleeve (12) is provided, which is detachably connected to the shaft (6),
the outer jacket (13) of which is also conically formed and which has a radially outwardly directed collar (14) at the end near the shaft nut (21),
wherein, when the inner ring (2) and the shaft (6) are in the connected state, the conical inner contour (11) of the bore (7) bears against the conical outer jacket (13) of the first sleeve (12), and
wherein the shaft nut (21) is penetrated by at least one axial bore (15.3),
**characterised in that**
the bore centre of at least one of these axial bores (15.3) and
the bore centre of an axial bore (15.1) provided in the collar (14) of the first sleeve (12) and provided with a thread are aligned.

2. The pre-tensioned rolling element mounting according to claim 1,
**characterised in that**
the first sleeve (12) has recesses (17) on the inner and/or outer lateral surface (16, 13).

3. The pre-tensioned rolling element mounting according to claim 1 or 2,
**characterised in that**
oil pressure bores (18.1, 18.2), which can be connected to a hydraulic unit (30), end on the inner contour (11) of the bore (7) and/or the shaft (6) in the region between the fixing means (8, 21).

4. The pre-tensioned rolling element mounting according to one of claims 1 to 3,
**characterised in that**
the inner contour (11) of the bore (7) is provided by a second sleeve (9), which is pushed into the bore (7) of the inner ring (2).

5. The pre-tensioned rolling element mounting according to claim 4,
**characterised in that**
the annular shape of the second sleeve (9) is interrupted by at least one slit (20), which completely runs through the second sleeve (9) in the axial and radial directions.

6. The pre-tensioned rolling element mounting according to one of claims 1 to 5,
**characterised in that**
at least the inner contour (11) of the bore (7) and/or the lateral surfaces of the second sleeves (9) are provided with depressions and/or channels (19), which are connected to the oil pressure bores (18.1).

7. The pre-tensioned rolling element mounting according to one of claims 1 to 6,
**characterised in that**
securing means (24) are provided, which prevent rotation of the shaft nut (21).

8. The pre-tensioned rolling element mounting according to one of claims 1 to 7,
**characterised in that**
measuring means (27) are provided, which detect the displacement path of the first sleeve (12) with respect to the conical inner contour (11) of the bore (7).

9. A method of manufacturing a pre-tensioned rolling element mounting according to one of claims 1 to 8,
**characterised in that**
the inner ring (2) is pushed onto the shaft (6) provided with the first sleeve (12) so that the inner ring (2) bears against one of the fixing means (8), that the inner ring (2) is then fixed axially on the shaft (6) with the further fixing means in the form of a shaft nut 21 by bringing the shaft nut (21) into contact with the inner ring (2),
that driving screws (26) are provided, which are screwed into the respective axial bores (15.2) of the shaft nut (21), wherein the driving screws (26) come into contact with the collar (14) of the first sleeve (12) with increasing screwing depth and displace same axially relative to the inner contour (11) of the bore (7), that the axial displacement path of the first sleeve (12) relative to the inner contour (11) of the bore (7) is detected by a measuring means (27), and that the displacement of a first sleeve (12) occurs under oil pressure by oil being pressed into the oil pressure bores (18.1, 18.2) by a hydraulic unit (30).

10. A method of separating a pre-tensioned rolling element mounting according to one of claims 1 to 8, **characterised in that**
the further fixing means in the form of a shaft nut (21) is unscrewed to such an extent that the bore centre of at least one axial bore (15.3) in the shaft nut (21) is aligned with a bore centre of an axial bore (15.1) provided in the collar of the first sleeve (12),
that release screws (28) are screwed through the axial bores (15.3) in the shaft nut (21) into the axial bores (15.1) provided on the collar (14), wherein when the screw head (29) comes into contact with the shaft nut (21) and when the release screws (28) are screwed in further, the first sleeve (12) is pulled out axially from the inner contour (11) of the bore (7), and
that the rolling element (1.1, 1.2) is separated from the shaft under oil pressure, by oil being pressed into the oil pressure bores (18.1, 18.2) by a hydraulic unit (27).

## Revendications

1. Montage sur palier à roulement précontraint avec au moins un palier à roulement (1.1, 1.2), comprenant une bague extérieure (3), une bague intérieure (2) traversée par un alésage (7) et des corps de palier (4) qui roulent sur des chemins de roulement (5) fournis par la bague extérieure (3) et la bague intérieure (2),
avec un arbre (6) qui pénètre dans l'alésage (7) de la bague intérieure et
avec des moyens de fixation (8, 21) qui fixent axialement sur l'arbre (6) la bague intérieure (2) poussée sur l'arbre (6), au moins un de ces moyens de fixation étant un écrou d'arbre (21),
dans lequel
le contour intérieur (11) de l'alésage (7) est de conception conique,
dans lequel il est prévu un premier manchon (12) qui est relié de manière amovible à l'arbre (6), dont l'enveloppe extérieure (13) est également de conception conique et qui présente une collerette (14) dirigée radialement vers l'extérieur à l'extrémité proche de l'écrou d'arbre (21), dans lequel, lorsque la bague intérieure (2) et l'arbre (6) sont reliés, le contour intérieur conique (11) de l'alésage (7) est en appui contre l'enveloppe extérieure conique (13) du premier manchon (12) et
dans lequel l'écrou d'arbre (21) est traversé par au moins un alésage axial (15.3),
**caractérisé en ce que**
le centre de perçage d'au moins un de ces alésages axiaux (15.3) et
le centre de perçage d'un alésage axial (15.1) prévu dans la collerette (14) du premier manchon (12) et muni d'un filetage coïncident.

2. Montage sur palier à roulement précontraint selon la revendication 1,
**caractérisé en ce que**
le premier manchon (12) présente des évidements (17) sur la surface d'enveloppe intérieure et/ou extérieure (16, 13).

3. Montage sur palier à roulement précontraint selon la revendication 1 ou 2,
**caractérisé en ce que**
sur le contour intérieur (11) de l'alésage (7) et/ou de l'arbre (6) dans la zone entre les moyens de fixation (8, 21), se terminent des alésages de pression d'huile (18.1, 18.2) qui peuvent être reliés à une unité hydraulique (30).

4. Montage sur palier à roulement précontraint selon l'une quelconque des revendications 1 à 3,
**caractérisé en ce que**
le contour intérieur (11) de l'alésage (7) est assuré par un second manchon (9) qui est enfoncé dans l'alésage (7) de la bague intérieure (2).

5. Montage sur palier à roulement précontraint selon la revendication 4,
**caractérisé en ce que**
la forme annulaire du second manchon (9) est interrompue par au moins une fente (20) qui traverse complètement le second manchon (9) dans les directions axiale et radiale.

6. Montage sur palier à roulement précontraint selon l'une quelconque des revendications 1 à 5, **caractérisé en ce**
**qu'**au moins le contour intérieur (11) de l'alésage (7) et/ou les surfaces d'enveloppe des seconds manchons (9) sont pourvus de rainures et/ou de canaux (19) qui sont reliés aux alésages de pression d'huile (18.1).

7. Montage sur palier à roulement précontraint selon l'une quelconque des revendications 1 à 6, **caractérisé en ce**
**que** sont prévus des moyens d'arrêt (24) qui empêchent une rotation de l'écrou d'arbre (21).

8. Montage sur palier à roulement précontraint selon l'une quelconque des revendications 1 à 7, **caractérisé en ce**
**que** sont prévus des moyens de mesure (27) qui détectent la course de déplacement du premier manchon (12) par rapport au contour intérieur conique (11) de l'alésage (7).

9. Procédé de fabrication d'un montage sur palier à roulement précontraint selon l'une quelconque des revendications 1 à 8,
**caractérisé en ce que**
la bague intérieure (2) est poussée sur l'arbre (6) muni du premier manchon (12), de sorte que la bague intérieure (2) s'appuie contre l'un des moyens de fixation (8), **en ce que** la bague intérieure (2) est ensuite fixée axialement sur l'arbre (6) avec l'autre moyen de fixation sous forme d'un écrou d'arbre 21 en amenant l'écrou d'arbre (21) en appui contre la bague intérieure (2),
**en ce que** sont prévues des vis d'avancement (26) qui sont vissées dans les alésages axiaux respectifs (15.2) de l'écrou d'arbre (21), à mesure que la profondeur de vissage augmente, les vis d'avancement (26) viennent en contact avec la collerette (14) du premier manchon (12) et déplacent celui-ci axialement par rapport au contour intérieur (11) de l'alésage (7), **en ce que** la course de déplacement axial du premier manchon (12) par rapport au contour intérieur (11) de l'alésage (7) est détectée par un dispositif de mesure (27) et **en ce que** le déplacement d'un premier manchon (12) s'effectue par pression d'huile, l'huile étant pressée dans les alésages de pression d'huile (18.1, 18.2) par une unité hydraulique (30).

10. Procédé de séparation d'un montage sur palier à roulement précontraint selon l'une quelconque des revendications 1 à 8, **caractérisé en ce que**
l'autre moyen de fixation sous la forme d'un écrou d'arbre (21) est desserré dans une mesure telle que le centre de perçage d'au moins un alésage axial (15.3) dans l'écrou d'arbre (21) coïncide avec un centre de perçage d'un alésage axial (15.1) prévu dans la collerette du premier manchon (12),
**en ce que** des vis de desserrage (28) sont vissées à travers les alésages axiaux (15.3) de l'écrou d'arbre (21) dans les alésages axiaux (15.1) prévus sur la collerette (14), lorsque la tête de vis (29) vient en contact avec l'écrou d'arbre (21) et que les vis de desserrage (28) sont davantage vissées, le premier manchon (12) étant retiré axialement du contour intérieur (11) de l'alésage (7) et
**en ce que** le palier à roulement (1.1, 1.2) est séparé de l'arbre par pression d'huile, l'huile étant pressée dans les alésages de pression d'huile (18.1, 18.2) par une unité hydraulique (27).
